# EUROPÄISCHE PATENTANMELDUNG

(11) **EP 3 424 883 A1**
(43) Veröffentlichungstag der Anmeldung: **09.01.2019**
(21) Anmeldenummer: 17179702.0
(22) Anmeldetag: 05.07.2017
(51) Int. Cl.: C01G 23/07, B01J 19/26, C01B 33/18, C01B 13/34

(54) **SPRÜHVERDAMPFUNG EINES FLÜSSIGEN ROHSTOFFES ZUR HERSTELLUNG VON SILICIUMDIOXID UND METALLOXIDEN**

(71) Anmelder: Evonik Degussa GmbH, 45128 Essen (DE)
(72) Erfinder: ERZ, Joachim, 79739 Schwörstadt (DE); SEVERIN, Claudia, 65719 Hofheim (DE); CORNELIUS, Maximilian, 60389 Frankfurt am Main (DE)

(57) **Zusammenfassung**

Die vorliegende Erfindung betrifft ein Verfahren zur Herstellung eines Metalloxids, umfassend a) Versprühung eines mindestens eine Metallverbindung haltigen flüssigen Rohstoffes durch dessen Vermischung mit einem Gas unter Bildung eines Aerosols;
b) Bildung eines gasförmigen Reaktionsgemisches aus dem in Schritt a) erhaltenen Aerosol durch dessen Verdampfung;
c) Umsetzung des in Schritt b) erhaltenen gasförmigen Reaktionsgemisches zu Metalloxid in Gegenwart von Sauerstoff.

## Beschreibung

Die vorliegende Erfindung betrifft ein Verfahren zur Herstellung von Siliciumdioxid und Metalloxiden, insbesondere von pyrogenem Siliziumdioxid ausgehend aus einem flüssigen, eine Metallverbindung enthaltenden Rohstoff.

Pyrogenes Siliciumdioxid, auch pyrogene Kieselsäure genannt, wird üblicherweise mittels einer Flammenhydrolyse- oder Flammenpyrolysemethode hergestellt. Die Flammenhydrolyse zur Herstellung von Siliciumdioxid ist ein seit langem bekanntes, großtechnisch durchgeführtes Verfahren. Bei diesem Verfahren wird ein gasförmiges hydrolysierbares Siliciumhalogenid in einer Flamme fein verteilt, die durch Verbrennung eines wasserbildenden, Wasserstoff enthaltenden Brennstoffs und eines sauerstoffhaltigen Gases gebildet worden ist. Die Verbrennungsflamme stellt dabei Wasser für die Hydrolyse des Siliciumhalogenides und genügend Wärme zur Hydrolysenreaktion zur Verfügung. Das in den Restgasen der Reaktion mitgetragene Siliciumdioxidpulver wird üblichen Kühl- und Feststofftrennverfahren unterworfen. Gewöhnlich wird Siliciumtetrachlorid eingesetzt. Beim Einsatz von kohlenstoffhaltigen Einsatzstoffen, wie beispielsweise Methyltrichlorsilan oder Dimethyldichlorsilan findet zusätzlich ein Oxidationsprozess zur Überführung des Kohlenstoffes in Kohlendioxid statt. Nimmt man eine nichthalogenierte Siliciumverbindung, beispielsweise ein Siloxan als Rohstoff, so nennt man dessen entsprechende thermische oxidative Umsetzung zur Kieselsäure Flammenpyrolyse.

In Folge der beiden Verfahrenstypen entstehendes Siliciumdioxidpulver wird als pyrogen hergestelltes Siliciumdioxid oder pyrogene Kieselsäure bezeichnet.

Analog, ausgehend aus den geeigneten verdampfbaren Metallverbindungen können verschiedene Metalloxidpulver hergestellt werden. So ist beispielsweise aus EP 1142830 A bekannt, Metalloxidpulver durch Verbrennen eines Aerosols aus in organischen Lösungsmitteln gelösten, organischen Vorläufern zu erhalten.

Es sind unterschiedliche Arten der Einbringung der Silicium- oder Metallverbindung in die Reaktionsflamme beschrieben.

In WO 2015003873 A1 wird ein Verfahren zur Herstellung pyrogener Kieselsäuren offenbart, bei dem dampfförmige Ströme einer hydrolysierbaren und/oder oxidierbaren Siliciumverbindung zusammen mit wenigstens einem Brennstoff und Sauerstoff zur Flammenhydrolyse-Reaktion gebracht werden. Um eine bessere Vermischung der gasförmigen Komponenten miteinander zu erreichen, werden dabei statische Mischelemente eingesetzt.

EP 0471139 A2 offenbart die Umsetzung einer gasförmigen halogenfreien Siliciumverbindung zu Kieselsäure durch Flammenpyrolyse. Dabei wird beispielsweise ein flüssiges, verdampfbares Cyclosiloxan aus einem extern gelegenen Vorratsbehälter mit einem Gasstrom in den Brenner befördert und zur Kieselsäure umgesetzt.

Der Einsatz eines gasförmigen Polyalkylsiloxanes in der Herstellung von Kieselsäuren mittels Flamenpyrolyse hat den Nachteil, dass die Spezies mit höheren Molekulargewichten die Zufuhrleitung durch Gelbildung blockieren können, wodurch die Qualität des erhaltenen Produktes sich verschlechtern kann. Dieses Problem wird in WO 99/06331 A1 gelöst, indem in einem Verfahren zur Herstellung pyrogener Kieselsäuren, ein flüssiges Siloxan fein verteilt und unmittelbar in die Flamme, wo dessen Umsetzung zu Kieselsäure stattfindet, eingespeist wird.

In WO 2017/001366 A1 wird ein prinzipiell ähnliches Verfahren zur Herstellung von Metalloxidpulvern mittels Flammenspraypyrolyse offenbart, bei dem man ein Siloxan enthaltendes Aerosol in einem Reaktor direkt in die Flamme einbringt und dort zur Siliciumdioxid umsetzt. Dabei wird das Aerosol durch gemeinsames Zerstäuben einer eine Metallverbindung enthaltenden Lösung und eines Zerstäubungsgases mittels einer oder mehrerer Düsen erhalten und das Verhältnis der Sprayfläche zur Reaktorquerschnittsfläche beträgt wenigstens 0,2.

US 2002041963 A1 offenbart ein Verfahren zur Herstellung von sphärischen, nichtkristallinen Kieselsäuren durch oxidative Verbrennung eines Siloxanes in einem Brenner bei einer adiabatischen Flammentemperatur von 1600 bis 5600 °C. Dabei kann das Siloxan flüssig oder gasförmig in die Flamme eingebracht werden.

WO 2004048261 A2 offenbart ein Verfahren zur Herstellung pyrogener Metalloxidpartikel durch Einleitung einer flüssigen verdampfbaren nicht-halogenierten Siliciumdioxid-Vorstufe, beispielsweise Octamethylcyclotetrasiloxan, in den gasförmigen Brenngasstrom nach der Flamme. Der letzte wird durch Verbrennung eines Brennstoffes in Gegenwart eines Oxidationsmittels erhalten.

Die aus dem Stand der Technik bekannten Verfahren, bei denen die gasförmige Metallverbindung in einem separaten Verdampfer erzeugt und in die Flamme eingebracht wird, haben den Nachteil, dass der Verdampfer selbst oder die entsprechenden Zufuhrleitungen mit der Zeit durch höhersiedende Produkte oder Zersetzungsprodukte leicht verstopft oder blockiert sein können. In diesem Fall muss oft das kontinuierliche Verfahren zur Herstellung der Kieselsäure oder eines Metalloxids unterbrochen werden und eine zeitaufwendige Reinigung des Verdampfers vorgenommen werden. Das verringert die Stabilität und Planbarkeit des gesamten Produktionsverfahrens und erhöht die Produktionskosten. Abgesehen davon, bedeutet Installation eines separaten Verdampfers in einer neuen Produktionsanlage beträchtliche Investitionskosten.

Die ebenfalls bekannten Methoden, bei denen die flüssige Metallverbinung direkt in die Flamme eingebracht wird, liefern oft schlechtere Verteilung des Eduktes in der Reaktionszone und daraus folgend eine schlechtere Produktqualität infolge dessen Inhomogenität.

Die Aufgabe der vorliegenden Erfindung ist es, ein verbessertes Verfahren zur Herstellung von Siliciumdioxid oder Metalloxiden bereitzustellen, das eine stabile und gute Produktqualität und einen robusten Betrieb ohne Unterbrechungen gewährleistet. Eine weitere Aufgabe der vorliegenden Erfindung ist ein Verfahren zur Herstellung von Siliciumdioxid oder Metalloxiden bereitzustellen, das ohne Einsatz eines separaten Verdampfers funktioniert.

Diese Aufgaben wurden durch ein Verfahren zur Herstellung von Siliciumdioxid und/oder eines Metalloxids, enthaltend die folgenden Schritte: a) Versprühung eines mindestens eine Siliciumverbindung und/oder eine Metallverbindung enthaltenden flüssigen Rohstoffes durch dessen Vermischung mit einem Gas unter Bildung eines Aerosols; b) Bildung eines gasförmigen Reaktionsgemisches aus dem in Schritt a) erhaltenen Aerosol durch dessen Verdampfung; c) Umsetzung des in Schritt b) erhaltenen gasförmigen Reaktionsgemisches zu Siliciumdioxid und/oder Metalloxid in Gegenwart von Sauerstoff, gelöst.

Der flüssige mindestens eine Siliciumverbindung und/oder eine Metallverbindung haltige Rohstoff wird in Schritt a) des erfindungsgemäßen Verfahrens versprüht, das heißt im umgebenen Gas fein verteilt und bildet somit ein Aerosol, ein zweiphasiges Flüssig-/Gasgemisch mit darin feinverteilter Flüssigkeitstropfen.

Das in Schritt a) gebildete Aerosol weist bevorzugt Flüssigkeitstropfen mit einer numerischen mittleren Partikelgröße von nicht mehr als 2 mm, besonders bevorzugt von nicht mehr als 1 mm, ganz besonders bevorzugt von nicht mehr als 0,5 mm auf. Eine solche numerische mittlere Partikelgröße der Flüssigkeitstropfen in Aerosol kann beispielsweise von einem Fachmann berechnet werden und ergibt sich aus den Abmessungen der eingesetzten Geräte, entsprechenden Strömungsgeschwindigkeiten, Flüssigkeit- und Gaseigenschaften und anderen Parameter. Alternativ kann die numerische mittlere Partikelgröße des in Schritt a) gebildeten Aerosols mittels Laserbeugungsmethode direkt gemessen werden. Dabei wird aus der resultierenden gemessenen Tropfengrößenverteilung der Mittelwert d₅₀, der wiedergibt, welche Tropfengroße 50% aller Partikeln nicht übersteigt, als numerische mittlere Partikelgröße definiert.

Die in Schritt a) des erfindungsgemäßen Verfahrens stattfindende Versprühung der Flüssigkeit kann mittels unterschiedlicher, dem Fachmann für diesen Zweck bekannten Apparate und Geräte erreicht werden. Beispielsweise können dabei Scheibenzerstäuber, Rotationszerstäuber, Ultraschallzerstäuber, Einstoff-, Zweistoff- oder Mehrstoffdüsen sowie verschiedene Injektorsysteme oder ähnliche Systeme verwendet werden.

Bevorzugt wird im erfindungsgenmäßen Verfahren der flüssige Rohstoff über mindestens eine Düse versprüht.

Der im erfindungsgemäßen Verfahren eingesetzte flüssige Rohstoff bildet durch Versprühen ein Aerosol. Der flüssige Rohstoff kann gleichzeitig mit dem Versprühen, in Schritt a) oder direkt nach dem Versprühen, in Schritt b) mit einem Gas vermischt werden. Das zunächst gebildete Aerosol kann dabei in einem Gasstrom weiter verteilt und verdünnt werden.

Das Verhältnis von in Schritten a) und b) insgesamt eingesetztem Gasvolumen in Normkubikmeter zur Menge des eingesetzten flüssigen Rohstoffes in kg beträgt bevorzugt von 0,05 bis 200, besonders bevorzugt von 0,1 bis 100, besonders bevorzugt von 0,5 bis 50 Nm³/kg.

Das in Schritt a) und/oder b) eingesetzte Gas enthält vorzugsweise Sauerstoff, bevorzugt in Form eines Gemisches enthaltend Sauerstoff und Stickstoff, besonders bevorzugt wird in Schritt a) Luft als Gas eingesetzt.

In Schritt b) des erfindungsgemäßen Verfahrens wird aus dem in Schritt a) erhaltenen Aerosol ein gasförmiges Reaktionsgemisch gebildet.

Besonders bevorzugt werden im erfindungsgemäßen Verfahren relativ leicht verdampfbare flüssige Silicium- und/oder Metallverbindungen eingesetzt, die beim Verdampfen stabil bleiben, das heißt sich nicht thermisch zersetzen. Besonders vorteilhaft ist es, wenn die eingesetzten Silicium- und/oder Metallverbindungen einen Siedepunkt von weniger als 300 °C bei 10 mbar aufweisen, besonders bevorzugt von weniger als 300 °C bei 100 mbar, ganz besonders bevorzugt von weniger als 300 °C bei 500 mbar. Wenn nicht explizit anders bezeichnet, werden in Bezug auf die vorliegende Erfindung immer die Werte für absolute Drücke angegeben.

Um sicherzustellen, dass keine Flüssigkeitstropfen enthaltend Silicium- und/oder Metallverbindung in der Reaktionsflamme zu Siliciumdioxid oder Metalloxid umgesetzt werden müssen, findet in Schritt b) des erfindungsgemäßen Verfahrens vorzugsweise eine vollständige Verdampfung und Überführung aller flüssigen Anteilen des in Schritt a) erhaltenen Aerosols in die Gasphase statt.

Eine solche Verdampfung des flüssigen Rohstoffes nach der Aerosolbildung kann mit unterschiedlichen Mitteln erreicht werden. Grundsätzlich, kann dem Aerosol eine zusätzliche Energie durch eine entsprechende Wärmequelle übertragen werden und/oder der Partialdruck der verdampften Flüssigkeit im Gasstrom kann nach der Aerosolbildung reduziert werden. Dementsprechend kann eine mögliche Durchführung der Schritte a) und b) des erfindungsgemäßen Verfahrens durch den Einsatz eines vorgewärmten Gases erfolgen. Das in Schritt a) und/oder b) eingesetzte Gas, bevorzugt Luft kann auf eine Temperatur von 50 bis 400 °C, besonders bevorzugt von 80 bis 350 °C vorgeheizt sein. Auch der flüssige Rohstoff kann vor Durchführung des Schrittes a) vorgeheizt sein. Der eingesetzte flüssige Rohstoff kann dabei auch überhitzt werden, das heißt auf eine höhere als Siedepunkt bei Normaldruck Temperatur erhitzt werden. Bevorzugt wird der flüssige Rohstoff vor Durchführung des Schrittes a) auf eine Temperatur von bis 500 °C, besonders bevorzugt 100 bis 400 °C, besonders bevorzugt 150 bis 350 °C vorgeheizt. Durch die Vorwärmung und eventuelle Überhitzung des eingesetzten Rohstoffes verringert sich die zur dessen Verdampfung notwendige Energiemenge, die über das vorgewärmte Gas bereitgestellt werden muss.

Die zur Verdampfung des flüssigen Rohstoffes notwendige Energie kann sowohl über die Vorwärmung des eingesetzten Rohstoffes, als auch über das vorgewärmte Gas, in welches der Rohstoff eingesprüht wird, zur Verfügung gestellt werden. Somit können die Bedingungen an den jeweiligen Rohstoff optimal angepasst werden und auch kritische Rohstoffe, beispielsweise solche mit niedrigen Zersetzungstemperaturen eingesetzt werden.

Da die adiabatische Flammentemperatur während der Durchführung des Schrittes c) des erfindungsgemäßen Verfahrens meistens mehr als 500 °C, bevorzugt von 1000 bis 2500 °C erreicht, wird durch die zuvor beschriebene Vorheizung des Reaktionsgemisches Reduzierung des Temperaturgradienten in der Flamme und somit Bildung Siliciumdioxid- und/oder Metalloxidpartikel mit einheitlichen Größen begünstigt.

In einer bevorzugten Ausführungsform der Erfindung weist der in Schritt a) eingesetzte flüssige Rohstoff vor Durchführung des Schrittes a) einen Druck von mindestens 1 bar, besonders bevorzugt mindestens 1,5 bar, ganz besonders bevorzugt mindestens 2 bar auf. Das im Schritt b) erhaltene Gasgemisch kann bevorzugt einen Druck von nicht mehr als 1,2 bar aufweisen, bevorzugt nicht mehr als 1,1 bar, besonders bevorzugt nicht mehr als 1 bar.

Bevorzugt wird in Schritt b) des erfindungsgemäßen Verfahrens eine höhere Temperatur des gasförmigen Reaktionsgemisches erreicht als die, die dem Taupunkt dieses Gemisches entspricht. Somit wird sichergestellt, dass in Schritt c) des erfindungsgemäßen Verfahrens ein vollständig gasförmiges Reaktionsgemisch eingesetzt wird. Bevorzugt weist das in Schritt c) eingesetzte gasförmige Reaktionsgemisch eine um mindestens 10 °C, besonders bevorzugt um wenigstens 30 °C, ganz besonders bevorzugt um wenigstens 50 °C höhere Temperatur auf als die Temperatur des Taupunkts dieses Gemisches.

Schritte a) und b) des erfindungsgemäßen Verfahrens können direkt nacheinander oder mindestens teilweise gleichzeitig stattfinden. Bevorzugt finden Schritte a) und b) mindestens teilweise gleichzeitig statt, das heißt schon bei der Versprühung des flüssigen Rohstoffes findet mindestens teilweise die Verdampfung der Flüssigkeit statt.

Der für die Umsetzung der Silicium- und/oder Metallverbindung zu Siliciumdioxid und/oder Metalloxid notwendige Sauerstoff, kann während mindestens eines der Schritte a) bis c) zugeführt werden. Dabei kann Sauerstoff, beispielsweise in reiner Form oder als Gemisch mit anderen Gasen, insbesondere Luft, eingesetzt werden. Wenn Luft während der Durchführung der Schritte a) und/oder b) eingeleitet wird, wird es weiterhin als Primärluft bezeichnet. Weiterhin kann es vorteilhaft sein, wenn zusätzlich Sekundärluft während des Schrittes c) eingesetzt wird. In der Regel wird die Menge an Sekundärluft so bemessen, dass das Verhältnis von Sekundärluft zu Primärluft von 0,1 bis 10 ist.

Es ist besonders vorteilhaft, wenn Sauerstoff im Vergleich zu brennbaren Bestandteilen des Reaktionsgemisches im Überschuss vorliegt. Die Kennzahl λ (lambda) ist das Verhältnis der im Reaktionsgemisch vorhandenen Sauerstoffmenge, dividiert durch die für die vollständige Verbrennung aller brennbaren Bestandteile des Reaktionsgemisches notwendige Sauerstoffmenge, jeweils in mol/h. Bevorzugt wird λ größer 1,2 eingestellt, besonders bevorzugt wird λ von 1,4 bis 5 gewählt.

Während mindestens eines der Schritte a)-c) des erfindungsgemäßen Verfahrens kann ein gasförmiger Brennstoff eingesetzt werden. Als ein solcher Brennstoff kommen beispielsweise Wasserstoff, Methan, Ethan, Propan, Butan und/oder Erdgas in Frage.

Der Reaktor zur Umsetzung des flüssigen mindestens eine Silicium- und/oder Metallverbindung enthaltenden Rohstoffes zu Siliciumdioxid und/oder Metalloxid gemäß dem erfindungsgemäßen Verfahren kann mindestens zwei Reaktorzonen A und B enthalten, die jeweils die Teile einer gemeinsamen Reaktionskammer sein können, ineinander übergreifend oder voneinander räumlich getrennt sein können. Die funktionelle Rolle der Reaktionskammer A besteht hauptsächlich darin, den eingesetzten flüssigen Rohstoff mithilfe mindestens eines Gases in ein gasförmiges Reaktionsgemisch zu überführen. In der Reaktionszone B findet hingegen eine chemische Umsetzung des vorhin gebildeten Silicium- und/oder Metallverbindung enthaltenden Gasgemisches zu Siliciumdioxid und/oder Metalloxid statt.

Bevorzugt befindet sich die Reaktorzone A oberhalb der Reaktorzone B. Besonders bevorzugt wird dabei die Silicium- und/oder Metallverbindung im oberen Teil der Reaktorzone A eingeleitet.

Die Reaktorzone A kann solche Elemente enthalten, die die Vermischung der in die Reaktorzone A eingeführten flüssigen Silicium- und/oder Metallverbindung und des Gases verbessern kann. Beispielsweise kann Reaktorzone A verschiedene Strömungsbrecher oder statische Mischer enthalten.

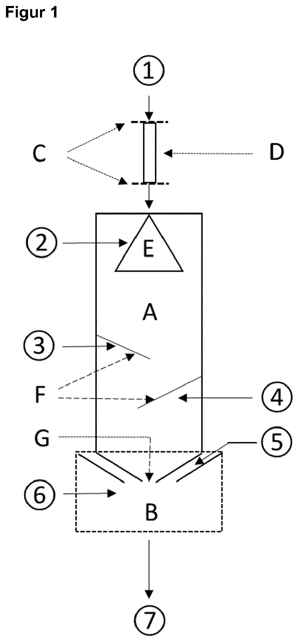

Im Folgenden wird die Erfindung anhand von Fig. 1, die eine spezielle Ausführungsform der vorliegenden Erfindung darstellt, näher erläutert. Diese stark vereinfachte Zeichnung soll einen Gesamtüberblick der erfindungsgemäßen Verfahrensschritte geben. Im Folgenden (Tabelle 1) werden die prinzipiellen Reaktorteile (A-G) sowie die entsprechenden Edukt- und Produktströme (1) bis (7) näher beschrieben.

**Tabelle 1: Bezugszeichen und Erklärungen zu Figur 1**

| | |
|---|---|
| A | Reaktorzone A |
| B | Reaktorzone B |
| C | Optionale Filter vor und/oder nach der Rohstoffvorwärmung (D) |
| D | Optionale Vorwärmung des flüssigen Rohstoffes |
| E | Feinverteiler des flüssigen Rohstoffes im Gas (Düse) |
| F | Optionale Mischelemente (statische Mischer) |
| G | Brennermund |
| (1) | eine Silicium und/oder Metallverbindung enthaltende Flüssigkeit zu Vorwärmung D |
| (2) | Primärluft zum Verteiler E |
| (3) | gasförmige Silicium- und/oder Metallverbindung zu Reaktorzone A |
| (4) | optionaler Kernbrennstoff (beispielsweise Wasserstoff) zu Reaktorzone A |
| (5) | optionaler Mantelbrennstoff (beispielsweise Wasserstoff) zu Reaktorzone B |
| (6) | Sekundärluft zu Reaktorzone B |
| (7) | Produktgemisch enthaltend Siliciumdioxid und/oder Metalloxid |

In dem in Fig. 1 dargestellten Reaktor wird der flüssige Rohstoff, eine Silicium- und/oder Metallverbindung enthaltende Flüssigkeit bei Bedarf in einer dazu vorgesehenen Vorrichtung vorgewärmt (D). Vor und/oder nach der Vorwärmung kann optional ein oder mehrere Filter (C) installiert werden um den eingesetzten Rohstoff von darin eventuell vorhandenen Feststoffpartikeln zu befreien. In der in Figur 1 dargestellten besonderen Ausführungsform sind die Reaktorzonen A und B übereinander positioniert. Im oberen Teil der Reaktorzone A wird über einen Feinverteiler (E) der flüssige Rohstoff (1) eingeleitet und fein verteilt. Die ebenfalls im oberen Teil der Reaktorzone A eingeleitete Primärluft (2) sorgt dafür, dass der fein verteilte flüssige Silicium- und/oder Metallverbindung enthaltende Rohstoff und Gas miteinander vermischt werden und ein gasförmiges Reaktionsgemisch oder ein Aerosol, das im weiteren Verlauf der Reaktorzone A vollständig gasförmig wird, gebildet wird. Eine bessere Vermischung der gasförmigen Komponenten in der Reaktorzone A wird mit den dort eingebauten Mischelementen (F), beispielsweise statischen Mischer erreicht. Eine gleiche wie in (1) vorhanden oder eine andere gasförmige Silicium- und/oder Metallverbindung (3) kann zusätzlich der Reaktorzone A zugeführt werden. Falls dabei eine andere als in (1) Silicium- und/oder Metallverbindung eingesetzt wird, können als Produkt die entsprechenden Mischoxide hergestellt werden. Ein Brennstoffgas, beispielsweise Wasserstoff, kann sowohl der Reaktorzone A (Kernbrennstoff, 4) als auch der Reaktorzone B (Mantelbrennstoff, 5) zugeführt werden. Im letzteren Fall kann Mantelwasserstoff zur Stabilisierung der in der Reaktorzone B erzeugten Flamme beitragen. Optional kann auch eine zusätzliche Menge an Luft (Sekundärluft, 6) der Reaktorzone B zugeführt werden, in der die Umsetzung des Reaktionsgemisches zum Produktgemisch enthaltend Siliciumdioxid und/oder Metalloxid (7) stattfindet.

Das durch das erfindungsgemäße Verfahren erhältliche Metalloxid enthält bevorzugt mindestens ein der Elemente Aluminium (Al), Cer (Ce), Eisen (Fe), Magnesium (Mg), Indium (In), Titan (Ti), Zinn (Sn), Yttrium (Y), Zink (Zn) und/oder Zirkonium (Zr) als Metallkomponente, besonders bevorzugt Al und/oder Ti.

Metalloxide im Sinne der Erfindung umfassen auch Metallmischoxide und dotierte Metalloxide, darunter auch mit Metalloxiden dotiertes Siliziumdioxid, mit Siliziumdioxid dotierte Metalloxide oder Mischoxide enthaltend Metalloxide und Siliciumdioxid.

Unter einem Metallmischoxid ist ein Metalloxid zu verstehen, bei dem eine innige Vermischung von Mischoxidkomponenten auf der Ebene von Primärpartikeln oder Aggregaten stattfindet. Dabei können die Primärpartikel über Sauerstoff verbrückte Metallkomponenten in Form von M1-O-M2-Bindungen aufweisen. Daneben können auch Bereiche einzelner Oxide M1O, M2O, M3O,... in den Primärpartikeln vorliegen.

Unter einem dotierten Metalloxid ist ein Oxid zu verstehen, bei dem die Dotierungskomponente sich vorwiegend oder ausschließlich auf einem Gitterplatz des Metalloxidgitters befindet. Die Dotierungskomponente kann dabei in metallischer oder oxidischer Form vorliegen. Ein Beispiel für ein dotiertes Metalloxid ist Indium-Zinnoxid, wo Zinnatome Plätze im Gitter des Indiumoxides besetzen.

Die Silicium- und Metallverbindungen im Sinne der vorliegenden Erfindung können metallorganischer und/oder anorganischer Natur sein. Beispiele anorganischer Ausgangsmaterialien können insbesondere Siliciumtetrachlorid, Metallchloride und Metallnitrate sein. Als metallorganische Verbindungen können insbesondere Silicium- und/oder Metallalkoholate und/oder Metallcarboxylate eingesetzt werden. Als Alkoholate können bevorzugt Ethylate, n-Propylate, iso-Propylate, n-Butylate und/oder tert.-Butylate eingesetzt werden. Als Carboxylate können die der Essigsäure, Propionsäure, Butansäure, Hexansäure, Oxalsäure, Malonsäure, Bernsteinsäure, Glutarsäure, Adipinsäure, Octansäure, 2-Ethyl-Hexansäure, Valeriansäure, Caprinsäure und/oder Laurinsäure zugrundeliegenden Verbindungen eingesetzt werden. Besonders vorteilhaft können 2-Ethlyhexanoate und/oder Laurate eingesetzt werden.

Die im erfindungsgemäßen Verfahren eingesetzten Silicium- und/oder Metallverbindungen können je nach deren Art beispielsweise in Wasser oder in organischen Lösungsmitteln gelöst sein. Dementsprechend kann eine Silicium- und/oder Metallverbindung enthaltender flüssiger Rohstoff im Sinne der vorliegenden Erfindung die Lösung eines Silicium- und/oder Metallverbindung, auch selbst eines Feststoffes darstellen. Dabei bezieht sich der Begriff "flüssiger Rohstoff" auf dessen Aggregatzustand unter beim Einsatz in Schritt a) des erfindungsgemäßen Verfahrens herrschenden Bedingungen.

Als organische Lösungsmittel, beziehungsweise als Bestandteil von organischen Lösungsmittelgemischen, können bevorzugt Alkohole wie Methanol, Ethanol, n-Propanol, iso-Propanol, n-Butanol oder tert.-Butanol, Diole wie Ethandiol, Pentandiol, 2-Methyl-2,4-pentandiol, Dialkylether wie Diethylether, tert.-Butyl-methylether oder Tetrahydrofuran, C1-C12-Carbonsäuren wie beispielsweise Essigsäure, Propionsäure, Butansäure, Hexansäure, Oxalsäure, Malonsäure, Bernsteinsäure, Glutarsäure, Adipinsäure, Octansäure, 2-Ethyl-Hexansäure, Valeriansäure, Caprinsäure, Laurinsäure sein. Weiterhin können Essigsäureethylester, Benzol, Toluol, Naphtha und/oder Benzin eingesetzt werden. Bevorzugt können Lösungen eingesetzt werden, die C2-C12-Carbonsäuren enthalten, insbesondere 2-Ethylhexansäure und/oder Laurinsäure.

Vorzugsweise liegt der Gehalt der C2-C12-Carbonsäuren in der Lösung bei weniger als 60 Gew.-%, besonders bevorzugt bei weniger als 40 Gew.-%, bezogen auf die Gesamtmenge an Lösung.

In einer besonders bevorzugten Ausführungsform enthalten die Lösungen der Silicium- und/oder Metallverbindungen, gleichzeitig ein Carboxylat und die ihm zugrunde liegende Carbonsäure und/oder ein Alkoholat und den ihm zugrunde liegenden Alkohol. Insbesondere können als Ausgangsmaterialien die 2-Ethylhexanoate in einem Lösungsmittelgemisch eingesetzt werden, welches 2-Ethylhexansäure enthält.

In einer besonders bevorzugten Ausführungsform des erfindungsgemäßen Verfahrens wird eine Siliciumverbindung zur Herstellung von Siliciumdioxid eingesetzt.

Die im Verfahren gemäß der Erfindung eingesetzte Siliciumverbindung kann eine nicht-halogenierte Verbindung ausgewählt aus der Gruppe bestehend aus Tetraalkoxyorthosilikaten, Silanen, Silikonöle, Polysiloxane und cyclische Polysiloxane, Silazane und Gemischen davon, sein. Als Tetraalkoxyorthosilikat können beispielsweise Tetraethoxyorthosilikat (TEOS) und Tetramethoxyorthosilikat (TMOS) eingesetzt werden. Als Silane werden bevorzugt Alkoxysilane, Alkylalkoxysilane, Arylalkylalkoxysilane, beispielsweise Tetramethoxysilan, Tetraethoxysilan, Methyltrimethoxysilan, Methyltriethoxysilan, Dimethyldimethoxysilan, Diemthyldiethoxysilan, Trimethylmethoxysilan, Trimethylethoxysilan, Diethylpropylethoxysilan eingesetzt. Polysiloxane und cyclische Polysiloxane, beispielsweise Octamethylcyclotetrasiloxan, Decamethylcyclopentasiloxan, Dodecamethylcyclohexasiloxan, Hexamethylcyclotrisiloxan und Silazane wie Hexamethyldisilazan können ebenfalls als Siliciumverbindung im erfindungsgemäßen Verfahren eingesetzt werden. Besonders bevorzugt wird Octamethylcyclotetrasiloxan eingesetzt.

Die im erfindungsgemäßen Verfahren eingesetzte Siliciumverbindung kann ebenfalls eine chlorierte Verbindung ausgewählt aus der Gruppe bestehend aus Siliciumtetrachlorid, Dichlorsilan, Trichlorsilan, Methyltrichlorsilan, Dimethyldichlorsilan, Methyldichlorsilan, Dibutyldichlorsilan, Äthyltrichlorsilan, Propyltrichlorsilan oder Gemischen davon, sein. Besonders bevorzugt wird Siliciumtetrachlorid eingesetzt.

Zur Herstellung eines Aluminiumoxids nach dem erfindungsgemäßen Verfahren eignet sich insbesondere Aluminiumchlorid als die entsprechende Metallverbindung. Dabei kann das Aluminiumchlorid, eine bei Normalbedingungen feste Verbindung als eine Schmelze oder eine Lösung in einem geeigneten Lösungsmittel eingesetzt werden.

Für die Herstellung von Titandioxid kann beispielsweise Titantetrachlorid als die entsprechende Metallverbindung eingesetzt werden.

### Beispiel 1

Octamethylcyclotetrasiloxan (D4), wird in einem 200 Liter Fass vorgelegt und mit einer Zahnradpumpe mit einer konstanten Fördergeschwindigkeit von 12,5 kg/h zu einer mit Thermalöl beheizten Rohrwendel (Figur 1, D) geleitet um D4 auf 150°C vorzuheizen. Das auf diese Weise vorgeheizte Octamethylcyclotetrasiloxan wird zu einer Einstoffdüse (Figur 1, E) der Firma SCHLICK (Hollow-Cone Mod. 121) mit einem Bohrungsdurchmesser von 0,7 mm geleitet, die hierbei einen Gegendruck von ca. 2,8 barü erzeugt. Der vor der Düse installierte Filter (Figur 1, C) sorgt dafür, dass die Düse mit den eventuell vorhandenen Feststoffpartikeln nicht verstopft werden kann. Das vorgewärmte und über die Einstoffdüse fein verteilte D4 wird mit einem auf 295 °C vorgewärmten Luftstrom (Figur 1, 2) vermischt. Durch das Versprühen des flüssigen Octamethylcyclotetrasiloxans in diese vorgewärmte Luft, verdampft das D4 in der nachfolgenden Rohrleitung (Brennerrohr) (Figur 1, A) mit dem Durchmesser von 80 mm und einer Länge von 4,2 Meter vollständig und bildet ein Gasgemisch. In einem nachfolgenden statischen Mischer (Figur 1, F) der Firma Sulzer (Mischer CompaXTM mit Dosierung) wird 6,25 Nm³/h Wasserstoff (Figur 1, 3) zugemischt (Primär-H₂). Eine gute Vermischung aller Komponenten begünstigt eine vollständige und gleichmäßige Umsetzung der Rohstoffe in der nachstehenden Reaktionszone (Figur 1, B). Das so erzeugte Gasgemisch wird dem Brenner zugeführt und tritt mit einer berechneten Austrittsgeschwindigkeit von 51 m/s (bei Normbedingungen) oder 99 m/s (bei Betriebsbedingungen) aus dem Brennermund (Figur 1, G) mit dem Durchmesser 32 mm in die Reaktionszone (Figur 1, B) aus. Zur Stabilisierung der Flamme wird eine sogenannte Mantelflamme erzeugt. Hierzu strömt aus einem konzentrischen Ringspalt mit der Spaltweite 1,5 mm zusätzlich 3 Nm³/h Wasserstoff (Figur 1, 5) aus, der in einer diffusiven Stützflamme verbrennt. Die heißen Reaktionsprodukte werden mit von 55 Nm³/h extern eingeleiteter Luft (Figur 1, 6) in die Reaktionszone gezogen. Das nach der Reaktion erzeugte Gas-/Feststoff-Gemisch wird auf < 200°C abgekühlt und dann pneumatisch einer Filteranlage zugeführt. Hier wird das entstandene pyrogene Oxid (10 kg/h) vom Hauptgasstrom getrennt und in einen Bunker gefördert. Die weiteren Details zur Durchführung dieses Versuchs sind der Tabelle 2 zu entnehmen.

Im Gegensatz zum in EP 0471139 A2 beschriebenen Herstellverfahren von pyrogenem Siliziumdioxid, wird in dem erfindungsgemäßen Verfahren der zu verarbeitende Rohstoff (Octamethylcyclotetrasiloxan) nicht in einem externen Verdampfer über Erhitzung an einer heißen Wandoberfläche in die Gasphase überführt, sondern über Versprühen, das heißt über einen direkten Übergang einer vorgewärmten, fein verteilten Flüssigkeit in die Gasphase durch Vermischen mit dem Luftstrom in der dafür vorgesehenen Reaktorzone A.

Das hier beschriebene Verfahren konnte über mehrere Monate erfolgreich betrieben werden ohne dass Feststoffpartikeln oder gelartige Ablagerungen die Düse oder andere Apparate verstopft hätten.

### Beispiel 2

Analog dem Beispiel 1 wird Siliciumtetrachlorid (Tetrachlorsilan, SiCl₄) als Rohstoff zur Herstellung von pyrogenem Siliziumdioxid eingesetzt. Die Details zur Durchführung dieses Versuchs sind der Tabelle 2 zu entnehmen.

### Beispiel 3

Analog dem Beispiel 1 wird Titantetrachlorid (TiCl₄) als Rohstoff zur Herstellung von pyrogenem Titandioxid eingesetzt. Die Details zur Durchführung dieses Versuchs sind der Tabelle 2 zu entnehmen.

**Tabelle 2**

| | Beispiel 1 | Beispiel 2 | Beispiel 3 |
|---|---|---|---|
| Rohstoff | D4 | SiCl₄ | TiCl₄ |
| Siedepunkt Rohstoff [°C] | 171-175 | 57 | 136 |
| Vorlauftemperatur Rohstoff [°C] | 150 | 30 | 30 |
| Durchsatz Rohstoff [kg/h] | 12,5 | 80 | 530 |
| Primärluftmenge [Nm³/h] | 128 | 70 | 1545 |
| Vorlauftemperatur Primärluft [°C] | 295 | 270 | 230 |
| Primär H₂-Menge [Nm³/h] | 6,3 | 26 | 180 |
| Vorlauftemperatur Primär-H₂ [°C] | 35 | 30 | 30 |
| Temperatur Reaktionsgemisch vor der Reaktionszone [°C] | 255 | 63 | 138 |
| Druck vor der Reaktorzone [mbar] | 995 | 985 | 990 |
| Durchmesser Einstoffdüse [mm] (Anzahl der Düsen) | 0,7 (1) | 1,4 (1) | 2,3 (3) |
| Durchmesser Brennerrohr [mm] | 80 | 80 | 200 |
| Länge Brennerrohr [m] | 4,2 | 4,2 | 3,0 |
| Volumen Brennerrohr [L] | 15 | 15 | 377 |

## Patentansprüche

1. Verfahren zur Herstellung von Siliziumdioxid und/oder eines Metalloxids, umfassend die folgenden Schritte:
a) Versprühung eines mindestens eine Siliciumverbindung und/oder eine Metallverbindung enthaltenden flüssigen Rohstoffes durch dessen Vermischung mit einem Gas unter Bildung eines Aerosols;
b) Bildung eines gasförmigen Reaktionsgemisches aus dem in Schritt a) erhaltenen Aerosol durch dessen Verdampfung;
c) Umsetzung des in Schritt b) erhaltenen gasförmigen Reaktionsgemisches zu Siliciumdioxid und/oder Metalloxid in Gegenwart von Sauerstoff.

2. Verfahren nach Anspruch 1,
**dadurch gekennzeichnet, dass** das in Schritt a) gebildete Aerosol Flüssigkeitstropfen mit einer numerischen mittleren Partikelgröße von nicht mehr als 2 mm aufweist.

3. Verfahren nach Anspruch 1 oder 2,
**dadurch gekennzeichnet, dass** das Verhältnis von in Schritten a) und b) insgesamt eingesetztem Gasvolumen in Normkubikmeter zur Menge des eingesetzten flüssigen Rohstoffs in kg von 0,1 bis 100 Nm³/kg beträgt.

4. Verfahren nach einem der Ansprüche 1 bis 3,
**dadurch gekennzeichnet, dass**
das in Schritt a) und/oder b) eingesetzte Gas Sauerstoff enthält.

5. Verfahren nach einem der Ansprüche 1 bis 4,
**dadurch gekennzeichnet, dass**
der flüssige Rohstoff vor Durchführung des Schrittes a) auf eine Temperatur von 50 bis 500 °C vorgeheizt wird.

6. Verfahren nach einem der Ansprüche 1 bis 5,
**dadurch gekennzeichnet, dass**
das in Schritt a) und/oder b) eingesetzte Gas auf eine Temperatur von 50 bis 400 °C vorgeheizt wird.

7. Verfahren nach einem der Ansprüche 1 bis 6,
**dadurch gekennzeichnet, dass**
das in Schritt a) eingesetzte flüssige Rohstoff vor Durchführung des Schrittes a) einen Druck von mindestens 1,5 bar aufweist und das im Schritt b) erhaltene Gasgemisch einen Druck von nicht mehr als 1,2 bar aufweist.

8. Verfahren nach einem der Ansprüche 1 bis 7,
**dadurch gekennzeichnet, dass**
das in Schritt c) eingesetzte gasförmige Reaktionsgemisch eine um mindestens 10 °C höhere Temperatur aufweist als die Temperatur des Taupunkts dieses Gemisches.

9. Verfahren nach einem der Ansprüche 1 bis 8,
**dadurch gekennzeichnet, dass**
das flüssige Rohstoff über mindestens eine Düse versprüht wird.

10. Verfahren nach einem der Ansprüche 1 bis 9,
**dadurch gekennzeichnet, dass**
Schritte a) und b) gleichzeitig stattfinden.

11. Verfahren nach einem der Ansprüche 1 bis 10,
**dadurch gekennzeichnet, dass**
in mindestens einem der Schritte a)-c) ein gasförmiger Brennstoff eingesetzt wird

12. Verfahren nach einem der Ansprüche 1 bis 11,
**dadurch gekennzeichnet, dass** das Metalloxid mindestens ein der Elemente Al, Ce, Fe, Mg, In, Ti, Sn, Y, Zn und/oder Zr als Metallkomponente enthält.

13. Verfahren nach einem der Ansprüche 1 bis 11,
**dadurch gekennzeichnet, dass** eine Siliciumverbindung zur Herstellung von Siliciumdioxid eingesetzt wird.

14. Verfahren nach Anspruch 13,
**dadurch gekennzeichnet, dass**
die Siliciumverbindung eine nicht-halogenierte Verbindung ausgewählt aus der Gruppe bestehend aus Tetraalkoxyorthosilikaten, Silanen, Silikonöle, Polysiloxane und cyclische Polysiloxane, Silazane und Gemischen davon, ist.

15. Verfahren nach Anspruch 13,
**dadurch gekennzeichnet, dass**
die Siliciumverbindung eine chlorierte Verbindung ausgewählt aus der Gruppe bestehend aus Siliciumtetrachlorid, Dichlorsilan, Trichlorsilan, Methyltrichlorsilan, Dimethyldichlorsilan, Methyldichlorsilan, Dibutyldichlorsilan, Äthyltrichlorsilan, Propyltrichlorsilan oder Gemischen davon, ist.
